# EUROPEAN PATENT SPECIFICATION

(11) **EP 2 853 829 B1**
(45) Date of publication and mention of the grant of the patent: **30.08.2017**
(21) Application number: 14186101.3
(22) Date of filing: 24.09.2014
(51) Int. Cl.: F24F 3/00, F24H 4/04, F25B 30/02, F24D 17/00, F24F 5/00, F24F 11/04, F24F 7/00, F25B 6/02, F24D 11/02

(54) **Air-conditioning device and method for controlling such an air-conditioning device**
Klimatisierungsvorrichtung und Verfahren zur Steuerung solch einer Klimatisierungsvorrichtung
Dispositif de climatisation et procédé de commande d'un tel dispositif

(30) Priority: 25.09.2013 BE 201300639
(43) Date of publication of application: 01.04.2015
(73) Proprietor: Renson Ventilation NV, 8790 Waregem (BE)
(72) Inventor: Coulier, Clint Richard William, 9050 Ledeberg (BE)
(74) Representative: Hostens, Veerle

(56) References cited:
- EP-A1- 2 306 107
- WO-A1-02/065026
- US-A1- 2011 023 517
- US-A1- 2013 074 539

## Description

The present invention relates to an air-conditioning device, comprising
- an air/water heat pump for heating water, comprising an evaporator;
- a ventilation device comprising at least one extract duct for discharging extract air from at least one space in a building;
- at least one supply duct for supplying supply air from outside the building to the air-conditioning device;
- a supply-regulating valve which is fitted in the supply duct for regulating the flow of supply air;
- control means for controlling the supply-regulating valve in order to regulate the flow of supply air;
- one single fan for sucking in extract air through the extract duct, for forcing sucked-in extract air over the evaporator, for sucking in supply air through the supply duct and for forcing sucked-in supply air over the evaporator; and
- an additional heating device for helping to heat the water, which is to be heated, by means of the air/water heat pump.

In addition, the present invention relates to a method for controlling such an air-conditioning device.

An air-conditioning device is a device by means of which the climate in a building is regulated as well as possible. Examples of existing air-conditioning devices with air/water heat pump are described in WO 02/065026 A1, US 2011/023517 A1, US 2013/074539 A1 and EP 2 306 107 A1.

The ventilation device of such an air-conditioning device comprises a central extractor system for extracting extract air from one or more spaces in a building. In the building at least one fan is provided (preferably centrally arranged) in a housing for sucking in the extract air. Furthermore, extract ducts are provided from the spaces from which air is to be extracted to this housing and a extract duct from this housing to the exterior of the building. The spaces from which extract air is extracted are spaces which are normally moist, such as kitchen, bathroom and toilet. If the air in the building is in this case supplied via natural ventilation (passive supply), such a ventilation system is also referred to as a C system. If the air in the building is in this case also supplied mechanically (active supply), such a ventilation system is also referred to as a D system or balanced ventilation. With all systems, the air is normally in each case supplied via dry spaces. In the building itself, passage of air from the dry spaces to the moist spaces is normally possible.

The air/water heat pump of an air-conditioning device to which the invention relates, in which a part of the heat from the extract air of a ventilation device is recovered, is typically a heat pump with a limited capacity which has to be supplied with a constant (nominal) flow in order to allow optimum operation of the heat pump. Typically, this is a non-modulating heat pump. The reason for this is that modulating heat pumps (with a larger capacity) require a much larger supply flow than is achievable in most common buildings using extract air from ventilation systems in order to function in a cost-effective manner.
Air/water heat pumps having a smaller capacity are usually not always able to heat the required amount of water in order to heat the most common buildings in an optimum manner. As a result thereof, an additional heating system usually has to be provided as a back-up, such as an electrical heating element or a gas boiler.

An air-conditioning device to which this invention relates, in which some of the heat from the extract air of a ventilation device is recovered by means of an air/water heat pump, is known, for example, from DE 10 2007 025 102 A1. The air-conditioning device described herein is marketed by NIBE AB under the name Fighter 640P.
In this air-conditioning device, either this extract air or a mixture of extract air and outside air is passed over the evaporator of the air/water heat pump. The air/water heat pump is used in order to heat the water of a central heating installation and/or sanitary hot water by means of a heat exchanger on the side of the condenser. Initially, the passage opening of the extract ducts is determined according to the air to be discharged per space, and the passage opening in the supply duct(s) is determined according to the supply flow which may supplement the discharge flow determined earlier in order to be able to control the desired flow over the evaporator of the air/water heat pump. Thereafter, these passage openings in the extract ducts and the supply duct(s) remain unchanged. The fan constantly works at its maximum in order to ensure the desired flow over the evaporator.
When the outside air temperature becomes too low, the supply duct is closed off at this point. This means that, at the same performance of the fan - which now no longer sucks in air via the supply duct - the discharge flow is increased. This results in a greatly increased power consumption, as initially more heat than required is extracted from spaces in a building together with the extract air, in order then to be able to heat spaces in this building.
The discharge flow is also increased in the air-conditioning device from FR 2 954 471 A1 (which does however not comprise a supply duct for supplying outside air), if the air/water heat pump is set to supply additional heat to water to be heated.

It is the object of the present invention is to provide such an air-conditioning device which is more energy-efficient than the known air-conditioning devices.

This object of the invention is achieved by providing an air-conditioning device comprising
- an air/water heat pump for heating water, comprising an evaporator;
- a ventilation device comprising at least one extract duct for discharging extract air from at least one space of a building;
- a supply duct for supplying supply air from outside the building to the air-conditioning device;
- a supply-regulating valve which is fitted in the supply duct for regulating the flow of supply air;
- one single fan for sucking in extract air through the extract duct, for forcing sucked-in extract air over the evaporator, for sucking in supply air through the supply duct and for forcing sucked-in supply air over the evaporator;
- an additional heating device for helping to heat the water, which is to be heated, by means of the air-water heat pump;
- an extract-regulating valve which is fitted in the extract duct for regulating the flow of extract air,
- control means for controlling the supply-regulating valve in order to regulate the flow of supply air on the basis of the flow of extract air; and
- control means for controlling the fan on the basis of the flow of extract air.

With an air-conditioning device according to the present invention, the discharge of air from the spaces is not based on the operation of the air/water heat pump, but can be based entirely on the demand for ventilation. Since the supply of outside air and the speed of the fan can be controlled on the basis of the flow of extract air, the correct amount, i.e. not excessive, of flow of outside air can be added to the discharged extract air in order to ensure a continuous flow over the evaporator of the air/water heat pump. If the discharge flow varies, it is possible, using an air-conditioning device according to the present invention, to constantly ensure the desired (nominal) flow over the evaporator of the air/water heat pump by readjusting the supply valve and readjusting the speed of the fan. Thus, a good continuous operation of the air/water heat pump can be guaranteed.

By controlling the extract-regulating valve, the discharge flow for this space can be regulated. In case of several extract ducts with several discharge-regulating valves, the discharge flow can be regulated independently for each respective space.

The discharge flow may, for example, be regulated on the basis of air parameters, such as the CO₂ content of the air, the NOₓ content of the air, the relative air humidity, the air temperature and/or the presence of people in the respective space, etc. This is also referred to as demand-driven ventilation.
This discharge-regulating valve may be fitted at the location of the respective space itself or at the location of a common collector into which various extract ducts open, etc.

Since, in the case of such demand-driven ventilation, extract air is only sucked into those spaces where this is really required (excessive CO₂ content, excessive humidity, etc.), a significant amount of energy can be saved compared to known air-conditioning devices.

In order to make demand-driven ventilation possible, an air-conditioning device according to the present invention preferably comprises a sensor for measuring an air parameter in the space or for detecting people in the space. This air-conditioning device then preferably furthermore also comprises control means for controlling the extract-regulating valve on the basis of measured values from measurements by this sensor.

An air-conditioning device according to the invention preferably furthermore also comprises communication means for communication between the ventilation device and the air/water heat pump.

The operation of the ventilation device and of the air/water heat pump is preferably tuned as well as possible to the operation of the other of the two, as the systems influence each other's operation. In order to be able to mutually tune the operation, the possibility of communication between the two systems is then also preferably provided.

The maximum position of the extract-regulating valve (corresponding to a maximum extraction flow) can preferably be set on the basis of this communication, and the discharge valve can then furthermore preferably be regulated between this maximum position and a minimum position.

In an increasing number of countries, the maximum required ventilation capacity for air which is supplied to and/or discharged from the spaces to be ventilated is determined by law on the basis of the type of space, the volume or the floor area of the respective space. In Belgium, these ventilation capacities for dwellings are laid down in Belgian standard NBN D 50-001. In the Netherlands, these are laid down in the Buildings Decree.

With central extraction systems, this maximum required ventilation capacity is usually initially set during installation of the ventilation device, so as to subsequently regulate the extraction flow between a minimum flow (which may also be zero) and a maximum flow which corresponds to this maximum required ventilation capacity in order to prevent excessive ventilation (and the associated loss of energy).

When setting the maximum extraction flow, the physical regulating means which regulate the flow of sucked-in extract air per space are limited (physically or by software), so that no more than this maximum extraction flow can be sucked in. However, with changing ambient parameters (resistances in the lines downstream of these physical regulating means) this maximum extraction flow changes while the setting remains unchanged. If discharge-regulating valves are provided, it will be ensured that these regulator valves can still be opened to a maximum degree to a well-defined position which corresponds to the maximum extraction flow during setting of this maximum extraction flow.

If the air/water heat pump of an air-conditioning device according to the present invention cannot deliver sufficient heat, the additional heating device may deliver additional heat. This additional heating device may, for example, be configured as an electrical heating element or as a gas boiler. In order to deliver this additional heat in an energetically advantageous way, a gas boiler is preferably used as additional heating device. Obviously, other heating devices are also conceivable as additional heating device.

In a particular embodiment of an air-conditioning device according to the invention, the air/water heat pump comprises a first condenser and the air-conditioning device comprises a central heating installation with a closed water circuit, in which the water from said water circuit is heatable by means of the first condenser of the air/water heat pump.

In such an air-conditioning device, the air/water heat pump and the additional heating device are preferably arranged in series in the closed water circuit.

More specifically, the central heating installation of such an air-conditioning device may comprise a heating element which is incorporated in the water circuit in order to heat the space. Typically, this heating element will be the tube system of an underfloor heating system or a radiator for a space, etc. With such an air-conditioning device, the air/water heat pump is preferably arranged in series downstream of the heating element and upstream of the additional heating device, viewed in the direction of the water flow through the water circuit. In this way, the air/water heat pump will always receive water at the coldest available water temperature of the water circuit, so that the air/water heat pump will always have the best COP.

In a further particular embodiment of an air-conditioning device according to the present invention, the air/water heat pump comprises a second condenser and the air-conditioning device comprises a storage vessel for sanitary hot water, in which the water from the storage vessel is heatable by means of the second condenser of the air/water heat pump.

A specific embodiment of an air-conditioning device according to the invention may comprise a single condenser which serves as said first condenser and as said second condenser. However, a preferred air-conditioning device according to the invention comprises a separate such first condenser and a separate such second condenser. In addition to a condenser and said evaporator, an air/water heat pump always comprises a compressor and an expansion valve as well. Preferably, the air/water heat pump of such an air-conditioning device having a separate first condenser and a separate second condenser comprises a first closed coolant circuit, comprising the evaporator, the compressor, the first condenser and the expansion valve and a second closed coolant circuit, comprising the evaporator, the compressor, the second condenser and the expansion valve.

By providing a second condenser, it is possible to save a substantial amount of energy, as additional temperature drops caused by providing an additional heat exchanger with the same condenser are prevented. The separation of heat emission takes place in the cooling circuit, so that no additional temperature drop is produced by an additional heat exchanger. As a result thereof, the efficiency of the air/water heat pump increases and the temperature which the water can reach increases as well.

The air/water heat pump of such an air-conditioning device furthermore preferably comprises switching means either to switch on the first closed coolant circuit or to switch on the second closed coolant circuit.

The first closed coolant circuit and the second closed coolant circuit preferably comprise a common coolant circuit part, comprising the evaporator, the compressor and the expansion valve. In such an embodiment, the air/water heat pump preferably comprises a first overflow which forms an overflow between the part of the first closed coolant circuit downstream of the compressor and upstream of the expansion valve and the part of the common coolant circuit part downstream of the expansion valve and upstream of the evaporator, and preferably comprises a second overflow which forms an overflow between the part of the second closed coolant circuit downstream of the compressor and upstream of the expansion valve and the part of the common coolant circuit part downstream of the expansion valve and upstream of the evaporator.

The object of the present invention is also achieved by providing a method for controlling an air-conditioning device comprising
- an air/water heat pump for heating water, comprising an evaporator;
- a ventilation device comprising at least one extract duct for discharging extract air from at least one space in a building;
- at least one supply duct for supplying supply air from outside the building to the air-conditioning device;
- a supply-regulating valve which is fitted in the supply duct for regulating the flow of supply air;
- control means for controlling the supply-regulating valve in order to regulate the flow of supply air;
- one single fan for sucking in waste through the extract duct, for forcing sucked-in extract air over the evaporator, for sucking in supply air through the supply duct and for forcing sucked-in supply air over the evaporator; and
- an additional heating device for helping to heat the water, which is to be heated, by means of the air-water heat pump;
in which the speed of the fan and the position of the supply-regulating valve are adjusted on the basis of the flow of extract air by means of the control means.

Preferably, with a method according to the present invention, when the air/water heat pump is in operation, the speed of the fan is adjusted in such a manner by means of the control means that the flow of extract air reaches a target value and the total of the flow of extract air and the flow of supply air which is forced over the evaporator corresponds to the nominal air flow of the air/water heat pump.
In this case, it is possible to ventilate in accordance with a theoretical target value per space or according to the actual requirement of the spaces to be ventilated. By supplementing the flow of extract air which is passed over the evaporator with a suitable amount of supply air from outside, it is always ensured that the nominal air flow of the air/water heat pump is passed over the evaporator. If the outside air delivers too much cold air to pass over the evaporator, the air/water heat pump will temporarily be stopped in order to achieve a climatization of the spaces to be air-conditioned which is as advantageous as possible in terms of energy.

Preferably, a method according to the present invention is used to control an air-conditioning device according to the present invention.

With a particular method according to the present invention, the extract-regulating valve is controlled on the basis of measured values from measurements by the sensor if this air-conditioning device comprises a sensor for measuring an air parameter in the space or for detecting people in the space. By means of several discharge-regulating valves for several extract ducts which are connected to various spaces to be air-conditioned, these discharge valves will preferably be controlled on the basis of the specific (actual) requirements of the various spaces to be air-conditioned.

More specifically, with a method according to the present invention, when the air/water heat pump is inoperative, the supply-regulating valve closes off the supply duct and the speed of the fan is adjusted in such a manner that the flow of extract air reaches a target value.

With a particular method according to the present invention, when the temperature of water which has been heated using the air/water heat pump remains below a threshold value, said water is additionally heated by means of the additional heating device.

The present invention will now be explained in more detail by means of the following detailed description of a preferred embodiment of an air-conditioning device and of a method according to the present invention. The sole aim of this description is to give illustrative examples and to indicate further advantages and particulars of this air-conditioning device and this method and can thus by no means be interpreted as a limitation of the area of application of the invention or of the patent rights defined in the claims.

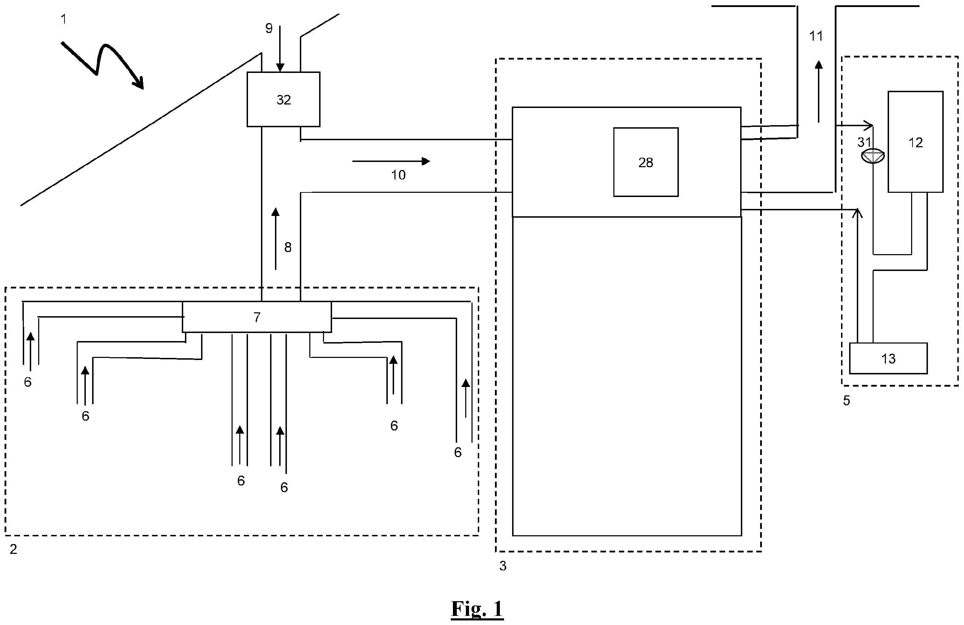

In this detailed description, reference numerals are used to refer to the attached drawings, in which
- ***Fig***. ***1*** diagrammatically shows a ventilation device according to the present invention;
- ***Fig***. ***2*** diagrammatically and in more detail shows the air/water heat pump of the ventilation device from Fig. 1;
- ***Fig. 3*** shows, in a graph, how the speed of the fan is adjusted with an air-conditioning device according to the present invention if the ventilation flow is adjusted during operation of the heat pump and the fan;
- ***Fig. 4*** shows, in a graph, how the speed of the fan is adjusted with an air-conditioning device according to the present invention if the heat pump is switched off;
- ***Fig***. ***5*** shows, in a graph, how the speed of the fan is adjusted with an air-conditioning device according to the present invention if the heat pump does not work and if the ventilation flow is adjusted.

As can be seen in Fig. 1, the illustrated air-conditioning device (1) comprises a ventilation device (2), an air/water heat pump (3) and a central heating installation (5) for regulating the climate in a dwelling.

The ventilation device (2) is a so-called C system (central mechanical extractor system) and comprises a collector (7). Various extract ducts (6) connect moist spaces in the dwelling (kitchen, bathroom, toilet) to the collector (7). A extract duct (8) starts from the collector (7) for common discharge of extract air from the various spaces. The extract duct (8) also serves as a supply duct (8) for supplying the extract air to the air/water heat pump (3).

The ventilation device (2) furthermore comprises discharge-regulating valves for setting the maximum extraction flow for each space to be ventilated and for regulating the extraction flow for each space between a minimum extraction flow and this maximum extraction flow. These regulator valves may be provided, for example, near the connection of the extract ducts (6) to the collector (7). Due to such regulator valves, the flow of extracted air per moist space can be regulated in an ideal manner on the basis of, for example, air parameters in the respective space, such as CO₂ content, relative air humidity, air temperature or presence of people in this space, etc.

Since, after setting the maximum extraction flow (by limiting the extract-regulating valves accordingly) during switching on or switching off of the air/water heat pump (3), the set maximum position of the physical regulating means no longer corresponds to this maximum extraction flow if this was set with the air/water heat pump (3) switched off or switched on, respectively, the air-conditioning device (1) also comprises communication means between the ventilation device (2) and the air/water heat pump (3) and the adjustment means are provided for adjusting the limitation of the extract-regulating valves for regulating the extraction flow per space, which corresponds to this maximum extraction flow, on the basis of the operation of the air/water heat pump (3).

In addition to the extract duct (8) for supplying extract air from the ventilation device (2) to the air/water heat pump (3), the air-conditioning device (1) also comprises a supply duct (9) for supplying outside air to the air/water heat pump (3). A supply-regulating valve (32) is fitted in the supply duct (9) for regulating the flow of supply air.

Both said lines (8, 9) come together in a central supply duct (10) for supplying mixed air to the air/water heat pump (3).

A fan (28) is arranged in the air/water heat pump (3) for sucking in extract air through the lines (6, 8) and sucking in supply air through the supply duct (9) for outside air.

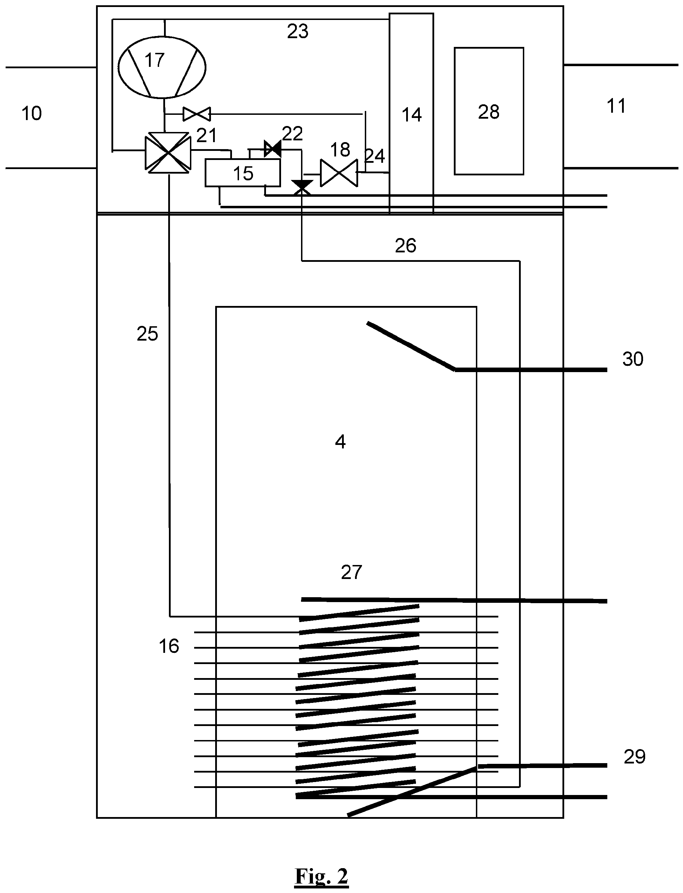

Fig. 2 diagrammatically shows the air/water heat pump (3) in more detail. In addition, a storage vessel (4) for sanitary hot water is incorporated in the housing of this air/water heat pump (3).

The mixed air comprising extract air and/or outside air is forced over the evaporator (14) in the air/water heat pump (3) by means of the fan (28), so that heat can be extracted from this mixed air by means of the air/water heat pump (3). This extracted heat can then be used to heat water in the central heating installation (5) and/or sanitary hot water in the storage vessel (4). After this mixed air has been forced over the evaporator (14), it is discharged as extract air via the total extract duct (11) of the air/water heat pump (3) to an external environment.

In order to extract heat from the mixed air, the air/water heat pump (3) comprises two coolant circuits in which coolant flows between the evaporator (14), the compressor (17), the corresponding first condenser (15) (which forms part of the first coolant circuit) or the corresponding second condenser (16) (which forms part of the second coolant circuit) and the expansion valve (18). The water of the central heating installation (5) can be heated by means of the first condenser (15). By means of a pump (31), this heated water can then be made to flow through radiators (13) of the central heating installation (5) and subsequently flow back (cooled down) to the first condenser (15). By means of the second condenser (16), the sanitary hot water in the storage vessel (4) can be heated. This sanitary hot water can be drawn off from the storage vessel (4) by means of the extract duct (30). Water to be heated may be added to the storage vessel (4) via the supply duct (29).

The first coolant circuit and the second coolant circuit comprise a common coolant circuit part. This common coolant circuit part comprises the evaporator (14), the compressor (17) and the expansion valve (18), with connecting lines (23, 24) being provided between the evaporator (14) and the compressor (17) (connecting line (23)), and between the expansion valve (18) and the evaporator (14) (connecting line (24)). In addition to this common coolant circuit part, the first coolant circuit comprises the first condenser (15) and connecting lines (21, 22) between the compressor (17) and this first condenser (15) (connecting line (21)) and between this first condenser (15) and the expansion valve (18) (connecting line (22)). In addition to this common coolant circuit part, the second coolant circuit comprises the second condenser (16) and connecting lines (25, 26) between the compressor (17) and this second condenser (16) (connecting line (25)) and between this second condenser (16) and the expansion valve (18) (connecting line (26)).

The air/water heat pump (3) comprises switching means (here a 4-way valve) to be able to switch between the first coolant circuit and the second coolant circuit. By means of this 4-way valve, excess coolant from the coolant circuit which is switched off at that point in time can be sucked into the switched-on coolant circuit.

The air-conditioning device (1) furthermore comprises a gas boiler (12). As an alternative or in addition to heating water by means of the air/water heat pump (3), the water of the central heating installation (5) can be heated by means of this gas boiler (12). The storage vessel (4) may also be connected to this gas boiler (12) by means of the heat exchanger (27) in order to alternatively or additionally heat the sanitary hot water by this means.
In the water circuit of the central heating installation (5), the air/water heat pump is arranged in series downstream of the heating element (13) and upstream of the gas boiler (12), viewed in the direction of the water flow through the water circuit. If the temperature of the water heated with the air/water heat pump (3) stays below a threshold value, this water is additionally heated by means of the gas boiler (12). If the air/water heat pump (3) is out of operation, the gas boiler (12) will have to heat this water by itself.

The heat exchanger (27) is incorporated in the storage vessel (4) and can be connected, for example, to a solar collector (not shown), so that the sanitary hot water from this storage vessel (4) can alternatively or additionally be heated up by means of this solar collector.

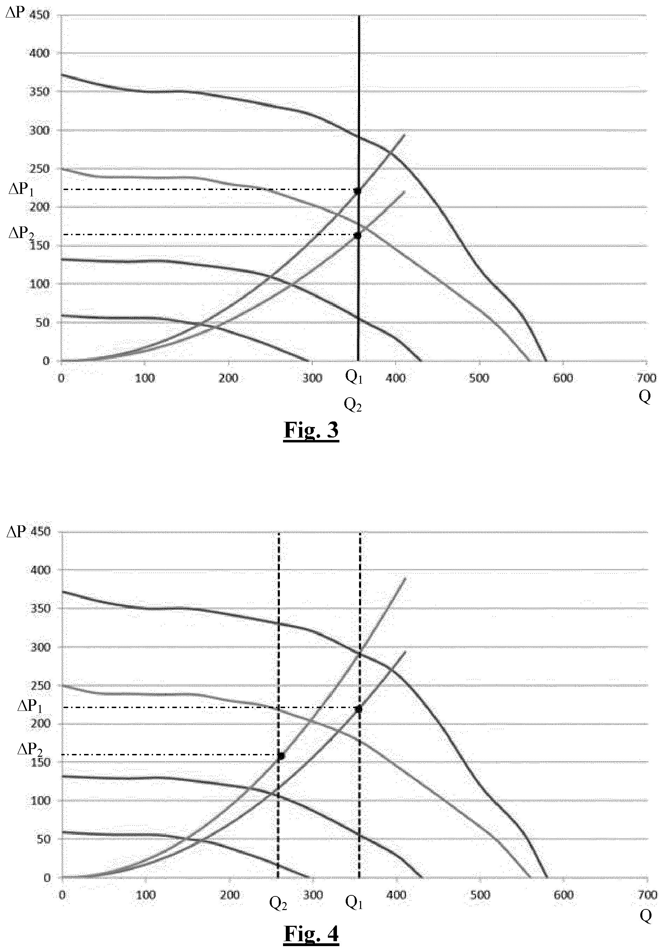

Figs 3-5 show a number of graphs of some situations which illustrate the operation of an air-conditioning device according to the present invention in these situations.

Fig. 3 shows the situation in which the heat pump (3) is in operation and the ventilation flow through the extract duct (6) with the current greatest pressure losses is reduced (ΔP₁ is reduced to ΔP₂). The speed of the fan (28) drops (see control curves for the fan). It is desired to pass the same nominal flow of mixed air (extract air and supply air) over the evaporator (14) (Q₂ stays Q₁). To this end, the supply-regulating valve (32) is opened further. Due to the change in the flow in the extract duct (6) with the greatest resistance and the change in the flow in the supply duct (9) for supplying air from outside, the flow in the other extract ducts (6) also changes. Also in this case, the extract-regulating valves are adjusted. All regulator valves are thus adjusted until the desired flow through the various extract ducts (6) is achieved again.

Fig. 4 shows the situation in which the heat pump (3) has been switched off (Q₂ is smaller than Q₁). This is done, for example, if the outside air drops below a certain value. The supply-regulating valve (32) is closed off (ΔP₁ drops to ΔP₂), since there is no longer any reason to draw in outside air and no energy should therefore be used for this purpose. The speed of the fan (28) is reduced to the lowest level at which the desired discharge flow per space to be ventilated can be ensured.

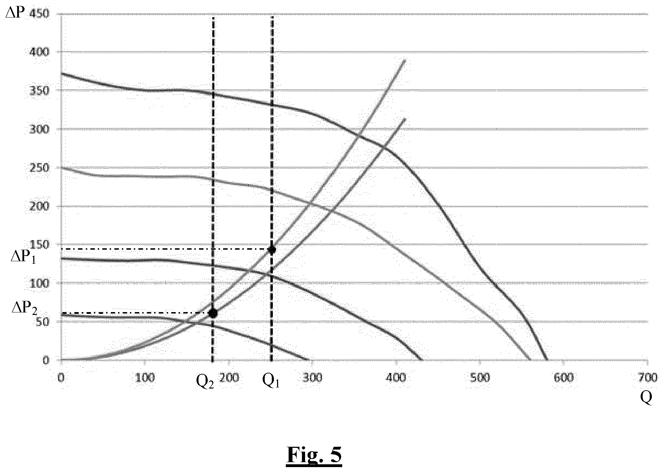

Fig. 5 shows the situation in which the ventilation flow is adjusted after the heat pump (3) has been switched off. The supply-regulating valve (32) remains closed. The ventilation flow through the extract duct (6) with the current largest pressure losses is reduced (ΔP₁ is reduced to ΔP₂). The flow of extract air is reduced (Q₂ is smaller than Q₁). The speed of the fan (28) drops and the extract-regulating valves are readjusted until the desired flow through the various extract ducts (6) is achieved again.

## Claims

1. Air-conditioning device (1) comprising
- an air/water heat pump (3) for heating water, comprising an evaporator (14);
- a ventilation device comprising at least one extract duct (6, 8) for discharging extract air from at least one space in a building;
- at least one supply duct (9) for supplying supply air from outside the building to the air-conditioning device;
- a supply-regulating valve (32) which is fitted in the supply duct (9) for regulating the flow of supply air;
- control means for controlling the supply-regulating valve (32) in order to regulate the flow of supply air;
- one single fan (28) for sucking in extract air through the extract duct (6, 8), for forcing sucked-in extract air over the evaporator (14), for sucking in supply air through the supply duct (9) and for forcing sucked-in supply air over the evaporator (14);
- an additional heating device (12) for helping to heat the water, which is to be heated, by means of the air/water heat pump (3);
**characterized in that** the air-conditioning device (1) comprises an extract-regulating valve which is fitted in the extract duct (6, 8) for regulating the flow of extract air, **in that** the control means for controlling the supply-regulating valve (32) are adapted for controlling said supply-regulating valve (32) on the basis of the flow of extract air, and **in that** the air-conditioning device comprises control means for controlling the fan (28) on the basis of the flow of extract air.

2. Air-conditioning device (1) according to Claim 1, **characterized in that** said air-conditioning device (1) comprises a sensor for measuring an air parameter in the space or for detecting people in the space, and **in that** the air-conditioning device (1) comprises control means for controlling the extract-regulating valve on the basis of measured values from measurements by this sensor.

3. Air-conditioning device (1) according to one of the preceding claims, **characterized in that** the air/water heat pump (3) comprises a first condenser (15) and **in that** the air-conditioning device (1) comprises a central heating installation (5) with a closed water circuit, in which the water from said water circuit is heatable by means of the first condenser (15) of the air/water heat pump (3).

4. Air-conditioning device (1) according to Claim 3, **characterized in that** the air/water heat pump (3) and the additional heating device (12) are arranged in series in the closed water circuit.

5. Air-conditioning device (1) according to Claim 4, **characterized in that** the central heating installation (5) comprises a heating element (13) which is incorporated in the water circuit in order to heat the space, and **in that**, viewed in the direction of the water flow through the water circuit, the air/water heat pump (3) is arranged in series downstream of the heating element (13) and upstream of the additional heating device (12).

6. Air-conditioning device (1) according to one of the preceding claims, **characterized in that** the air/water heat pump (3) comprises a second condenser (16), and **in that** the air-conditioning device (1) comprises a storage vessel (4) for sanitary hot water, in which the water from the storage vessel (4) is heatable by means of the second condenser (16) of the air/water heat pump (3).

7. Air-conditioning device (1) according to one of Claims 3 to 5 and Claim 6, **characterized in that** the air/water heat pump (3) comprises a compressor (17), comprises an expansion valve (18), comprises a first closed coolant circuit, comprising the evaporator (14), the compressor (17), the first condenser (15) and the expansion valve (18), and comprises a second closed coolant circuit, comprising the evaporator (14), the compressor (17), the second condenser (16) and the expansion valve (18).

8. Air-conditioning device (1) according to Claim 7, **characterized in that** the air/water heat pump (3) comprises switching means either to switch on the first closed coolant circuit or to switch on the second closed coolant circuit.

9. Air-conditioning device (1) according to Claim 8, **characterized in that** the first closed coolant circuit and the second closed coolant circuit comprise a common coolant circuit part, comprising the evaporator (14), the compressor (17) and the expansion valve (18).

10. Method for controlling an air-conditioning device (1) comprising
- an air/water heat pump (3) for heating water, comprising an evaporator (14);
- a ventilation device comprising at least one extract duct (6, 8) for discharging extract air from at least one space in a building;
- at least one supply duct (9) for supplying supply air from outside the building to the air-conditioning device;
- a supply-regulating valve (32) which is fitted in the supply duct (9) for regulating the flow of supply air;
- control means for controlling the supply-regulating valve (32) in order to regulate the flow of supply air;
- one single fan (28) for sucking in extract air through the extract duct (6, 8), for forcing sucked-in extract air over the evaporator (14), for sucking in supply air through the supply duct (9) and for forcing sucked-in supply air over the evaporator (14);
- an additional heating device (12) for helping to heat the water, which is to be heated, by means of the air/water heat pump (3);
**characterized in that** the speed of the fan (28) and the position of the supply-regulating valve (32) are adjusted on the basis of the flow of extract air by means of the control means.

11. Method according to Claim 10, **characterized in that**, when the air/water heat pump (3) is in operation, the speed of the fan (28) and the position of the supply-regulating valve (32) is adjusted in such a manner by the control means that the flow of extract air reaches a target value and the total of the flow of extract air and the flow of supply air which is forced over the evaporator (14) corresponds to the nominal air flow of the air/water heat pump (3).

12. Method according to Claim 10 or 11, **characterized in that** an air-conditioning device (1) according to one of Claims 1 to 9 is controlled by means thereof.

13. Method according to Claim 12, **characterized in that** an air-conditioning device (1) according to Claim 2 is controlled, and **in that** the extract-regulating valve is controlled on the basis of measured values from measurements by the sensor.

14. Method according to one of Claims 10 to 13, **characterized in that**, when the air/water heat pump (3) is inoperative, the supply-regulating valve (32) closes off the supply duct (9) and the speed of the fan (28) is adjusted in such a manner that the flow of extract air reaches a target value.

15. Method according to one of Claims 10 to 14, **characterized in that**, when the temperature of water which has been heated using the air/water heat pump (3) remains below a threshold value, said water is additionally heated by means of the additional heating device (12).

## Patentansprüche

1. Klimatisierungsvorrichtung (1), umfassend:
- eine Luft/Wasser-Wärmepumpe (3) zum Erwärmen von Wasser, umfassend einen Verdampfer (14);
- eine Lüftungsvorrichtung, umfassend mindestens einen Abzugkanal (6, 8) zum Austragen von Abluft aus mindestens einem Raum in einem Gebäude;
- mindestens einen Zufuhrkanal (9) zum Zuführen von Zuluft von außerhalb des Gebäudes zu der Klimatisierungsvorrichtung;
- ein Zufuhrregulierungsventil (32), das in den Zufuhrkanal (9) eingepasst ist, um den Fluss der Zuluft zu regulieren;
- Steuermittel zum Steuern des Zufuhrregulierungsventils (32), um den Fluss der Zuluft zu regulieren;
- einen einzelnen Ventilator (28) zum Einsaugen von Abluft durch den Abzugkanal (6, 8), zum zwangsweisen Führen von eingesaugter Abluft über den Verdampfer (14), zum Einsaugen von Zuluft durch den Zufuhrkanal (9) und zum zwangsweisen Führen eingesaugter Zuluft über den Verdampfer (14);
- eine zusätzliche Heizvorrichtung (12), um das Erwärmen des Wassers zu unterstützen, das mithilfe der Luft/Wasser-Wärmepumpe (3) erwärmt werden soll;
**dadurch gekennzeichnet, dass** die Klimatisierungsvorrichtung (1) ein Abzugregulierungsventil umfasst, das in den Abzugkanal (6, 8) eingepasst ist, um den Fluss von Abluft zu regulieren, da die Steuermittel zum Steuern des Zufuhrregulierungsventils (32) vorgesehen sind, um das Zufuhrregulierungsventil (32) basierend auf dem Fluss der Abluft zu steuern, und dass die Klimatisierungsvorrichtung Steuermittel zum Steuern des Ventilators (28) basierend auf dem Abluftstrom umfasst.

2. Klimatisierungsvorrichtung (1) nach Anspruch 1, **dadurch gekennzeichnet, dass** die Klimatisierungsvorrichtung (1) einen Sensor zum Messen eines Luftparameters im Raum oder zum Erkennen von Personen in dem Raum umfasst, und dass die Klimatisierungsvorrichtung (1) Steuermittel zum Steuern des Abzugregulierungsventils basierend auf gemessenen Werten aus Messungen dieses Sensors umfasst.

3. Klimatisierungsvorrichtung (1) nach einem der vorhergehenden Ansprüche, **dadurch gekennzeichnet, dass** die Luft/Wasser-Wärmepumpe (3) einen ersten Kondensierer (15) umfasst und dass die Klimatisierungsvorrichtung (1) eine Zentralheizungsinstallation (5) mit einem geschlossenen Wasserkreislauf umfasst, in dem das Wasser aus dem Wasserkreislauf mittels des ersten Kondensierers (15) der Luft/Wasser-Wärmepumpe (3) erwärmbar ist.

4. Klimatisierungsvorrichtung (1) nach Anspruch 3, **dadurch gekennzeichnet, dass** die Luft/Wasser-Wärmepumpe (3) und die zusätzliche Heizvorrichtung (12) in dem geschlossenen Wasserkreislauf in Reihe angeordnet sind.

5. Klimatisierungsvorrichtung (1) nach Anspruch 4, **dadurch gekennzeichnet, dass** die Zentralheizungsinstallation (5) ein Heizelement (13) umfasst, das in den Wasserkreislauf eingebaut ist, um den Raum zu erwärmen, und dass in Richtung des Wasserflusses durch den Wasserkreislauf gesehen die Luft/Wasser-Wärmepumpe (3) in Reihe nachgeordnet zu dem Heizelement (13) und vorgeordnet zu der zusätzlichen Heizvorrichtung (12) angeordnet ist.

6. Klimatisierungsvorrichtung (1) nach einem der vorhergehenden Ansprüche, **dadurch gekennzeichnet, dass** die Luft/Wasser-Wärmepumpe (3) einen zweiten Kondensierer (16) umfasst und dass die Klimatisierungsvorrichtung (1) ein Speichergefäß (4) für Nutzheißwasser umfasst, wobei das Wasser aus dem Speichergefäß (4) mithilfe des zweiten Kondensierers (16) der Luft/Wasser-Wärmepumpe (3) erwärmbar ist.

7. Klimatisierungsvorrichtung (1) nach einem der Ansprüche 3 bis 5 und Anspruch 6, **dadurch gekennzeichnet, dass** die Luft/Wasser-Wärmepumpe (3) einen Kompressor (17) umfasst, ein Expansionsventil (18) umfasst, einen ersten geschlossenen Kühlmittelkreislauf umfasst, den Verdampfer (14) umfasst, den Kompressor (17), den ersten Kondensierer (15) und das Expansionsventil (18) umfasst, und einen zweiten geschlossenen Kühlmittelkreislauf umfasst, der den Verdampfer (14), den Kompressor (17), den zweiten Kondensierer (16) und das Expansionsventil (18) umfasst.

8. Klimatisierungsvorrichtung (1) nach Anspruch 7, **dadurch gekennzeichnet, dass** die Luft/Wasser-Wärmepumpe (3) Umschaltmittel umfasst, um entweder auf den ersten geschlossenen Kühlmittelkreislauf zu schalten oder auf den zweiten geschlossenen Kühlmittelkreislauf zu schalten.

9. Klimatisierungsvorrichtung (1) nach Anspruch 8, **dadurch gekennzeichnet, dass** der erste geschlossene Kühlmittelkreislauf und der zweite geschlossene Kühlmittelkreislauf ein gemeinsames Kühlmittelkreislaufteil umfassen, das den Verdampfer (14), den Kompressor (17) und das Expansionsventil (18) umfasst.

10. Verfahren zum Steuern einer Klimatisierungsvorrichtung (1), umfassend:
- eine Luft/Wasser-Wärmepumpe (3) zum Erwärmen von Wasser, umfassend einen Verdampfer (14);
- eine Lüftungsvorrichtung, umfassend mindestens einen Abzugkanal (6, 8) zum Austragen von Abluft aus mindestens einem Raum in einem Gebäude;
- mindestens einen Zufuhrkanal (9) zum Zuführen von Zuluft von außerhalb des Gebäudes zu der Klimatisierungsvorrichtung;
- ein Zufuhrregulierungsventil (32), das in den Zufuhrkanal (9) eingepasst ist, um den Fluss der Zuluft zu regulieren;
- Steuermittel zum Steuern des Zufuhrregulierungsventils (32), um den Fluss der Zuluft zu regulieren;
- einen einzelnen Ventilator (28) zum Einsaugen von Abluft durch den Abzugkanal (6, 8), zum zwangsweisen Führen von eingesaugter Abluft über den Verdampfer (14), zum Einsaugen von Zuluft durch den Zufuhrkanal (9) und zum zwangsweisen Führen eingesaugter Zuluft über den Verdampfer (14);
- eine zusätzliche Heizvorrichtung (12), um das Erwärmen des Wassers, das erwärmt werden soll, mithilfe der Luft/Wasser-Wärmepumpe (3) zu unterstützen;
**dadurch gekennzeichnet, dass** die Drehzahl des Ventilators (28) und die Position des Zufuhrregulierungsventils (32) basierend auf dem Fluss von Abluft mithilfe des Steuermittels angepasst werden.

11. Verfahren nach Anspruch 10, **dadurch gekennzeichnet, dass**, wenn die Luft/Wasser-Wärmepumpe (3) in Betrieb ist, die Drehzahl des Ventilators (28) und die Position des Zufuhrregulierungsventils (32) durch das Steuerungsmittel derart angepasst werden, dass der Fluss der Abluft einen Zielwert erreicht und die Summe des Flusses von Abluft und des Flusses von Zuluft, die zwangsweise über den Verdampfer (14) geführt werden, dem nominellen Luftstrom der Luft/Wasser-Wärmepumpe (3) entspricht.

12. Verfahren nach Anspruch 10 oder 11, **dadurch gekennzeichnet, dass** eine Klimatisierungsvorrichtung (1) nach einem der Ansprüche 1 bis 9 durch deren Mittel gesteuert wird.

13. Verfahren nach Anspruch 12, **dadurch gekennzeichnet, dass** eine Klimatisierungsvorrichtung (1) nach Anspruch 2 gesteuert wird, und dass das Abzugregulierungsventil auf Basis der gemessenen Werte aus Messungen durch den Sensor gesteuert wird.

14. Verfahren nach einem der Ansprüche 10 bis 13, **dadurch gekennzeichnet, dass**, wenn die Luft/Wasser-Wärmepumpe (3) nicht in Betrieb ist, das Zufuhrregulierungsventil (32) den Zufuhrkanal (9) absperrt und die Drehzahl des Ventilators (28) in einer solchen Weise angepasst wird, dass der Fluss der Abluft einen Zielwert erreicht.

15. Verfahren nach einem der Ansprüche 10 bis 14, **dadurch gekennzeichnet, dass**, wenn die Temperatur des unter Verwendung der Luft/Wasser-Wärmepumpe (3) erwärmten Wassers unter einem Schwellenwert bleibt, dieses Wasser zusätzlich mithilfe der zusätzlichen Heizvorrichtung (12) erwärmt wird.

## Revendications

1. Dispositif (1) de climatisation comportant
- une pompe (3) à chaleur air/eau servant à chauffer de l'eau, comportant un évaporateur (14) ;
- un dispositif de ventilation comportant au moins un conduit (6, 8) d'extraction servant à évacuer de l'air d'extraction d'au moins un espace dans un bâtiment ;
- au moins un conduit (9) d'alimentation servant à amener de l'air d'alimentation provenant de l'extérieur du bâtiment au dispositif de climatisation ;
- une soupape (32) de régulation d'alimentation qui est montée dans le conduit (9) d'alimentation pour réguler le débit d'air d'alimentation ;
- des moyens de commande servant à commander la soupape (32) de régulation d'alimentation afin de réguler le débit d'air d'alimentation ;
- un ventilateur unique (28) servant à aspirer de l'air d'extraction à travers le conduit (6, 8) d'extraction, à obliger l'air d'extraction aspiré à passer par-dessus l'évaporateur (14), à aspirer de l'air d'alimentation à travers le conduit (9) d'alimentation et à obliger l'air d'alimentation aspiré à passer par-dessus l'évaporateur (14) ;
- un dispositif (12) de chauffage supplémentaire servant à contribuer au chauffage de l'eau à chauffer au moyen de la pompe (3) à chaleur air/eau ;
**caractérisé en ce que** le dispositif (1) de climatisation comporte une soupape de régulation d'extraction qui est montée dans le conduit (6, 8) d'extraction pour réguler le débit d'air d'extraction, **en ce que** les moyens de commande servant à commander la soupape (32) de régulation d'alimentation sont prévus pour commander ladite soupape (32) de régulation d'alimentation en fonction du débit d'air d'extraction, et **en ce que** le dispositif de climatisation comporte des moyens de commande servant à commander le ventilateur (28) en fonction du débit d'air d'extraction.

2. Dispositif (1) de climatisation selon la revendication 1, **caractérisé en ce que** ledit dispositif (1) de climatisation comporte un capteur servant à mesurer un paramètre d'air dans l'espace ou à détecter des personnes dans l'espace, et **en ce que** le dispositif (1) de climatisation comporte des moyens de commande servant à commander la soupape de régulation d'extraction en fonction de valeurs mesurées issues de mesures par ce capteur.

3. Dispositif (1) de climatisation selon l'une des revendications précédentes, **caractérisé en ce que** la pompe (3) à chaleur air/eau comporte un premier condenseur (15) et **en ce que** le dispositif (1) de climatisation comporte une installation (5) de chauffage central dotée d'un circuit fermé d'eau, dans lequel l'eau issue dudit circuit d'eau peut être chauffée au moyen du premier condenseur (15) de la pompe (3) à chaleur air/eau.

4. Dispositif (1) de climatisation selon la revendication 3, **caractérisé en ce que** la pompe (3) à chaleur air/eau et le dispositif (12) de chauffage supplémentaire sont disposés en série dans le circuit fermé d'eau.

5. Dispositif (1) de climatisation selon la revendication 4, **caractérisé en ce que** l'installation (5) de chauffage central comporte un élément chauffant (13) qui est incorporé dans le circuit d'eau afin de chauffer l'espace, et **en ce que**, vue dans la direction de l'écoulement d'eau à travers le circuit d'eau, la pompe (3) à chaleur air/eau est disposée en série en aval de l'élément chauffant (13) et en amont du dispositif (12) de chauffage supplémentaire.

6. Dispositif (1) de climatisation selon l'une des revendications précédentes, **caractérisé en ce que** la pompe (3) à chaleur air/eau comporte un deuxième condenseur (16), et **en ce que** le dispositif (1) de climatisation comporte un récipient (4) de stockage pour l'eau chaude sanitaire, dans lequel l'eau provenant du récipient (4) de stockage peut être chauffée au moyen du deuxième condenseur (16) de la pompe (3) à chaleur air/eau.

7. Dispositif (1) de climatisation selon l'une des revendications 3 à 5 et la revendication 6, **caractérisé en ce que** la pompe (3) à chaleur air/eau comporte un compresseur (17), un détendeur (18), un premier circuit fermé d'agent de refroidissement, comportant l'évaporateur (14), le compresseur (17), le premier condenseur (15) et le détendeur (18), et comporte un deuxième circuit fermé d'agent de refroidissement, comportant l'évaporateur (14), le compresseur (17), le deuxième condenseur (16) et le détendeur (18).

8. Dispositif (1) de climatisation selon la revendication 7, **caractérisé en ce que** la pompe (3) à chaleur air/eau comporte des moyens d'aiguillage servant soit à mettre en fonction le premier circuit fermé d'agent de refroidissement, soit à mettre en fonction le deuxième circuit fermé d'agent de refroidissement.

9. Dispositif (1) de climatisation selon la revendication 8, **caractérisé en ce que** le premier circuit fermé d'agent de refroidissement et le deuxième circuit fermé d'agent de refroidissement comportent une partie commune de circuit d'agent de refroidissement, comportant l'évaporateur (14), le compresseur (17) et le détendeur (18).

10. Procédé de commande d'un dispositif (1) de climatisation comportant
- une pompe (3) à chaleur air/eau servant à chauffer de l'eau, comportant un évaporateur (14) ;
- un dispositif de ventilation comportant au moins un conduit (6, 8) d'extraction servant à évacuer de l'air d'extraction d'au moins un espace dans un bâtiment ;
- au moins un conduit (9) d'alimentation servant à amener de l'air d'alimentation provenant de l'extérieur du bâtiment au dispositif de climatisation ;
- une soupape (32) de régulation d'alimentation qui est montée dans le conduit (9) d'alimentation pour réguler le débit d'air d'alimentation ;
- des moyens de commande servant à commander la soupape (32) de régulation d'alimentation afin de réguler le débit d'air d'alimentation ;
- un ventilateur unique (28) servant à aspirer de l'air d'extraction à travers le conduit (6, 8) d'extraction, à obliger l'air d'extraction aspiré à passer par-dessus l'évaporateur (14), à aspirer de l'air d'alimentation à travers le conduit (9) d'alimentation et à obliger l'air d'alimentation aspiré à passer par-dessus l'évaporateur (14) ;
- un dispositif (12) de chauffage supplémentaire servant à contribuer au chauffage de l'eau à chauffer au moyen de la pompe (3) à chaleur air/eau ;
**caractérisé en ce que** la vitesse du ventilateur (28) et la position de la soupape (32) de régulation d'alimentation sont réglées en fonction du débit d'air d'extraction à l'aide des moyens de commande.

11. Procédé selon la revendication 10, **caractérisé en ce que**, lorsque la pompe (3) à chaleur air/eau est en fonctionnement, la vitesse du ventilateur (28) et la position de la soupape (32) de régulation d'alimentation sont réglées par les moyens de commande de telle manière que le débit d'air d'extraction atteigne une valeur cible et que le total du débit d'air d'extraction et du débit d'air d'alimentation qui est forcé à passer par-dessus l'évaporateur (14) corresponde au débit d'air nominal de la pompe (3) à chaleur air/eau.

12. Procédé selon la revendication 10 ou 11, **caractérisé en ce qu'**un dispositif (1) de climatisation selon l'une des revendications 1 à 9 est commandé à l'aide de celui-ci.

13. Procédé selon la revendication 12, **caractérisé en ce qu'**un dispositif (1) de climatisation selon la revendication 2 est commandé, et **en ce que** la soupape de régulation d'extraction est commandée en fonction de valeurs mesurées issues de mesures par le capteur.

14. Procédé selon l'une des revendications 10 à 13, **caractérisé en ce que**, lorsque la pompe (3) à chaleur air/eau ne fonctionne pas, la soupape (32) de régulation d'alimentation ferme le conduit (9) d'alimentation et la vitesse du ventilateur (28) est réglée de telle manière que le débit d'air d'extraction atteigne une valeur cible.

15. Procédé selon l'une des revendications 10 à 14, **caractérisé en ce que**, lorsque la temperature de l'eau qui a été chauffée à l'aide de la pompe (3) à chaleur air/eau reste inférieure à une valeur seuil, ladite eau subit un chauffage supplémentaire au moyen du dispositif (12) de chauffage supplémentaire.
